Europäisches Patentamt

**European Patent Office**

Office européen des brevets

(19)

(11) Publication number: **0 013 166**
A1

(12) # EUROPEAN PATENT APPLICATION

(21) Application number: **79303018.0**

(22) Date of filing: **21.12.79**

(51) Int. Cl.³: **B 65 G 65/44**
G 21 C 21/04, B 65 D 90/48

(30) Priority: **21.12.78 US 972165**

(43) Date of publication of application:
**09.07.80 Bulletin 80/14**

(84) Designated Contracting States:
**BE FR GB IT SE**

(71) Applicant: **WESTINGHOUSE ELECTRIC CORPORATION
Westinghouse Building Gateway Center
Pittsburgh Pennsylvania 15222(US)**

(72) Inventor: **Huggins Sr., Thomas Bourne
239 Barmount Drive
Columbia, South Carolina(US)**

(74) Representative: **van Berlyn, Ronald Gilbert
23, Centre Heights
London, NW3 6JG(GB)**

(54) Vibratory tube feeder for powder transfer system.

(57) Apparatus for controlling the flow of powder to a point of use in a powder processing system. The apparatus includes a first hopper (16) vibrated at a predetermined frequency to help assure that the powder is discharged as required onto a horizontal feeder tube (32), which also has vibrators (40) for transferring powder along the horizontal feeder tube (32). The horizontal feeder tube (32) extends into a second hopper (44) which then channels the powder to a point of use, such as a roll compactor. A level sensor (33 or 56) equipped with a probe (35 or 55) determines powder height and acts to control operation of the vibrators (40) which move powder through the system.

FIG. I

# VIBRATORY TUBE FEEDER FOR POWDER TRANSFER SYSTEM

The invention described herein relates to powder transfer systems and more particularly to apparatus which utilizes vibratory forces for transferring relatively dense powder from one point to another in the system.

The nuclear fuel powder resulting from the conversion of uranium hexafluoride to uranium dioxide must be transmitted through powder hoppers and feeder tubes before being discharged to pellet forming presses or other equipment used in the powder handling system. The powder is heavy and dense and usually is moved by conventional screw-type feeders or conveyors from one area to another as required by the manufacturing processes. The helically shaped screw in the conveyor fits closely to the conveyor inner walls and is designed to move powder over the required distance. However, the powder attributes, particularly its density, causes plugging conditions along the screw length and at the conveyor outlet thus creating expensive maintenance and repair procedures. To alleviate this problem, other types of powder transfer systems have been used, such as placing the system under a vacuum and utilizing pneumatic forces to move the powder through the system. The introduction of air however, requires that the system be made essentially airtight and this requirement gives rise to a host of complicated seal problems since health regulations prohibit the escape of uranium or other possibly radioactive powders to the environment.

The combined effects of powder compaction and bridging in the auguring method of transferring powder has created unreliability in the powder movement system in addition to causing high maintenance costs.

It is therefore the principal object of the present invention to provide an apparatus for efficiently flowing a hazardous powder through a system in a controlled manner that is without clogging and without subjecting the environment to hazards.

With this object in view, the present invention resides in an apparatus for controlling the flow of powder through a system comprising a first feed hopper adapted to receive powder to be transferred through a system and having vibrators mounted thereon for facilitating the flow of powder therethrough, a horizontally disposed feeder tube so positioned below said feed hopper as to receive the powder from said feed hopper, enclosure means associated with said feed hopper and feeder tube for preventing the escape of powder to the environment and for containing the powder in the system, a second feed hopper connected to said feeder tube for receiving powder therefrom, second enclosure means interconnecting the feeder tube with the second feed hopper for containing powder in the system, and means in communication with an outlet opening in the second feed hopper for receiving powder discharged therefrom, characterized in that vibration means are associated with said feeder tube for moving said powder horizontally to the second feed hopper, and said first feed hopper includes a spout loosely fitted in said feeder tube in spaced relationship from the bottom thereof thereby providing a space between the walls of the tube to accommodate displacement of the feed hopper spout during its movement imparted by said vibrators, and a boot is disposed so as to interconnect the feed hopper with the feeder tube for containing the powder in the system.

The invention will become more readily apparent from the following description of a preferred embodiment thereof shown, by way of example only, in the accompanying drawing wherein:

Figure 1 is a view in elevation, partly in section, illustrating apparatus used for moving powder in a powder transfer system; and

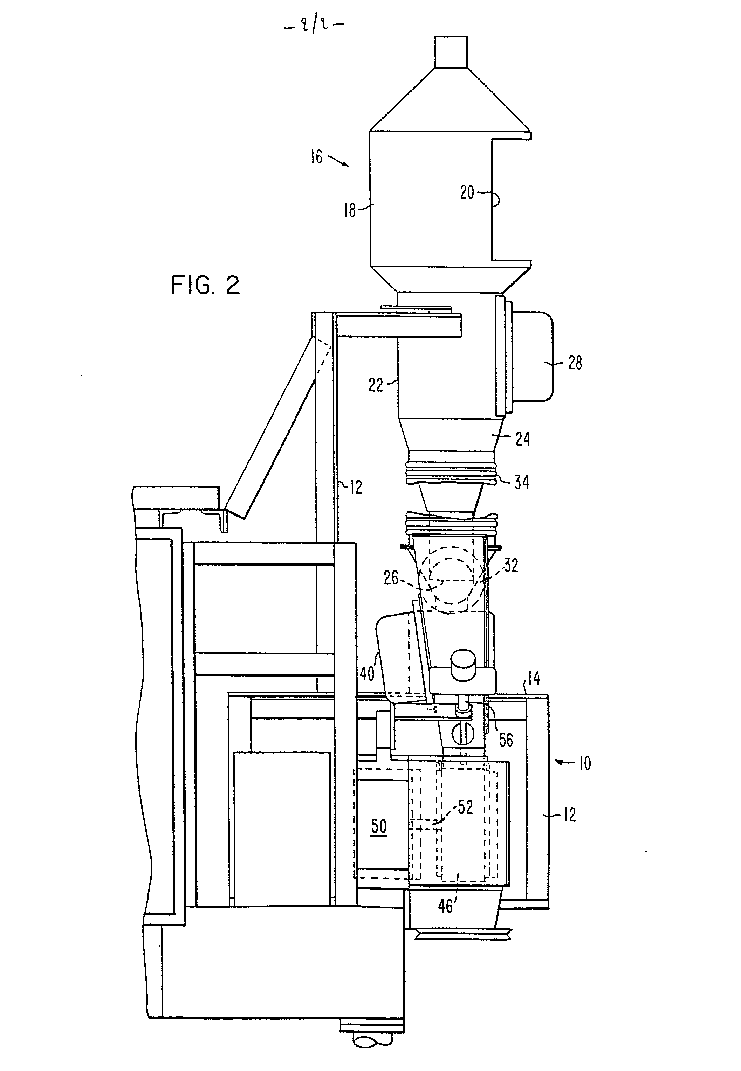

Figure 2 is a side view of the apparatus illustrated in Figure 1.

Referring now to the drawing wherein like reference characters designate like or corresponding parts throughout the several views, there is shown a portion of the system used for moving uranium dioxide powder in a nuclear fuel pellet manufacuring process. The apparatus includes a base 10 consisting of multiple brackets and braces 12, 14 which comprise the structural framework for supporting a feed hopper 16. The hopper is of general cylindrical configuration and includes a containment 18 having an access opening 20 of a size sufficient to receive a charge of uranium dioxide powder to be transferred through the system. In the event a preselected charge of powder is to be moved separately through the system an amount of powder of known volume and weight is loaded through the opening 20 into the hopper. If the system is designed for continuous flow of powder therethrough, the powder desirably is fed at a continuous rate into the hopper, but its movement may be controlled by the selective energization of vibrators as more fully described hereafter. The central portion 22 of the feed hopper which likewise is of cylindrical configuration and measures about 25 cm. in diameter, merges into a conical-shaped member 24 having a 10 cm. spout 26 integrally connected to the lower end thereof.

Although the uranium dioxide powder falls through the hopper by gravity, there nevertheless is a tendency for the powder to form bridges in the conical-spout area, particularly if powder flow is intermittant and not continuously fed through the system. For this reason, a pair of vibrators 28, 30 are mounted on adjacent sides of the central portion of the hopper and during operation, impart a vibratory force to the hopper walls at a frequency of about 3600 cycles per second. At this frequency, the powder particles are kept in motion thus precluding the opportunity for bridging or other clogging to take place in the hopper. The vibrators therefore effectively serve to constantly move the powder downwardly through the hopper and the spout 26 into a feeder tube 32. Although different types of vibrators may successfully be used for this purpose, one commercial type which is manufactured by the Syntron Corporation, Model V-20, is designed to be energized from a 120 volt, 60 hertz source. Since the feed hopper and spout 26 must be free to vibrate in feeder tube 32 to assure the movement of powder therethrough, a space between the members exists through which powder dust may escape to the environment. To help assure the retention of powder dust and effective airborne contamination in the system, a boot 34 of rubber or similar material encloses the lower portion of the hopper and the upper part of the receiver.

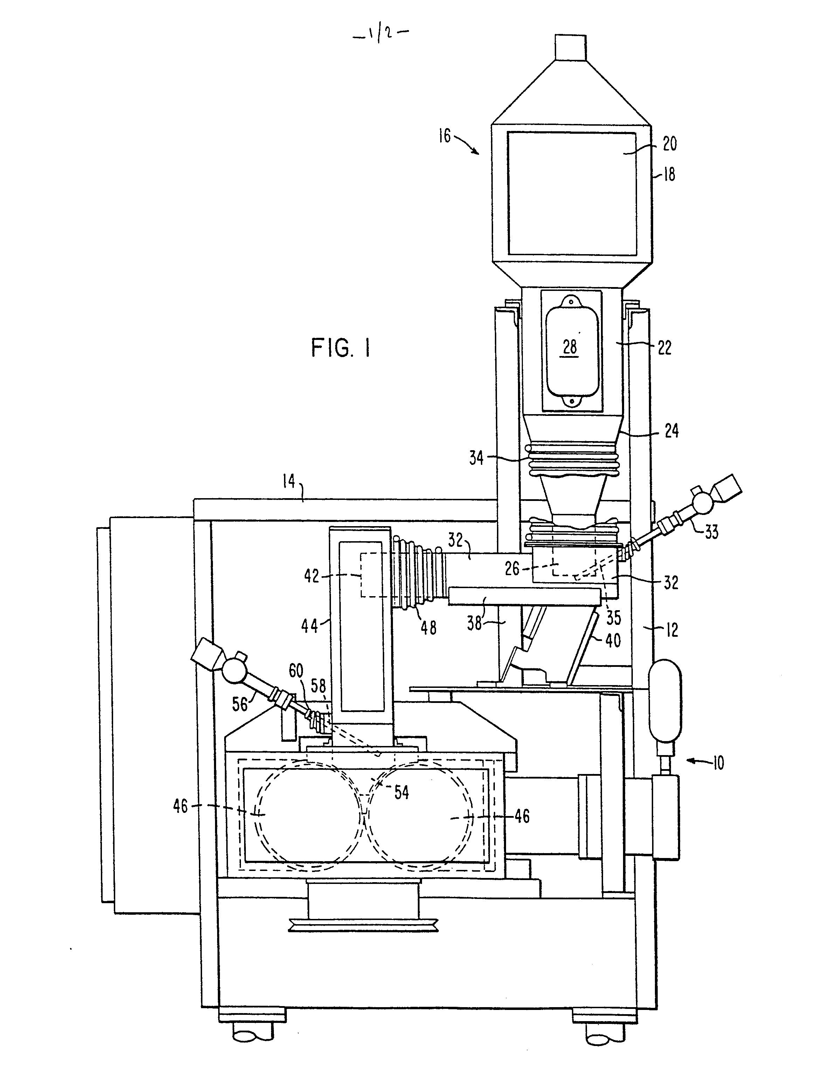

As shown, the lower end of spout 26 terminates at about the center of the feeder tube 32 which comprises a 10 cm. feeder tube. This tube is supported by brackets and braces 38 and a second vibrator 40 mounted on the framework 10 is connected to the tube to effect the horizontal movement and transfer of powder to the left as shown in Figure 1. Vibrators 28, 30 on hopper 16 and vibrator 40 preferably are connected electrically and therefore operate at the same time to move powder through the system. The second vibrator oscillates at a frequency of 3600 cycles per second and also is of a design manufactured by the Syntron Corporation, Model BF-2. At this frequency, the powder particles are incrementally and continuously moved along the tube length and no bridging or plugging will occur in hopper 24, particularly if powder feed into the hopper matches the movement of powder from the spout and along tube 32.

In those installation where powder feed is not continuous, it may be desirable to sense powder height in tube 32 beneath spout 26. This may be accomplished by installing a powder level indicator 33 having a sensing probe 35 located adjacent the end of spout 26. When the powder level reaches a predetermined height which is set by the probe end, the probe senses the level and the level indicator acts to energize the vibrator 40 to move the powder horizontally away from the spout. This action will continue until the powder drops to a level just below the level of the probe, at which time the vibrators will be deenergized and thus stop powder movement. The powder level indicator is Model CL-10DJ manufactured by Automation Products Inc. of Dallas, Texas. Other equivalent level indicators obviously may be used.

The discharge end 42 of the feeder tube 32 terminates at about the center of a roll-feed hopper 44 which likewise is mounted on the base 10. The roll-feed hopper 44 includes a flange to which is connected a boot 48 for containing powder dust in the system as previously described.

The powder from feed hopper 44 may be discharged to any source in the system, but is here shown as being supplied to a pair of rolls 46 which serve to compact the powder before discharging it into a container disposed therebeneath. The rolls 46 may be driven from a conventional power source such as a motor 50 having a shaft 52 directly connected to the rolls 46.

To feed the powder into the rolls for compaction, a channeling plate 54 is mounted on the base and in a position between the rolls 46. The rolls are designed to operate with a predetermined level of powder in the channeling plates 54 and as powder flows into this area, its level is sensed by a powder level indicator 56 having a level sensing probe 58. The level indicator is of the same design as indicator 33 described above and is attached to the base by bracket 58. A boot 60 is utilized for containing powder dust within the system.

## OPERATION

In operation, uranium dioxide powder is fed through opening 20 in the feed hopper which is arranged to permit the powder to flow downwardly through the central portion and out the 10 cm. spout into tube 32. To help assure the flow of powder through the unit, vibrators 28, 30 are energized on demand and thus cause the hopper to vibrate at a predetermined frequency which helps the powder to feed freely into and through the spout on the feed hopper and into the horizontally disposed feeder tube 32. The powder depth in the receiver is controlled by the depth that the spout extends into the receiver. With vibrator 40 in operation, powder beneath the spout will be automatically transferred horizontally to the left as shown in Figure 1, thus leaving a void for more powder to flow from spout 26. In the alternative arrangement, a powder level indicator may be used for sensing the height of powder and controlling the operation of vibrator 40 for moving the powder in feeder tube 32.

The feeder tube 32 incrementally transfers the powder into the feed hopper 44 from which it is discharged onto the guiding plates 54 at the bottom of the hopper. The level indicator probe 58 senses the level of powder and as it reaches a predetermined height, the probe senses the level and acts to de-energize vibrators 40, 28 which are in the process of feeding powder through the feeder tube 32 into the feed hopper 44. As the compaction rolls continue to operate and draw powder from member 54, the level thereof drops and the sensor again detects this condition and acts to re-energize the vibrator 40 to supply an additional amount of powder to the compaction rolls. In those installations where powder flow to the compaction rolls or other source is continuous, it is desirable to use a tuning fork type of level indicator as indicated above. Other level detecting devices may be used in lieu thereof such as a commercially available Bin-o-matic level detector which includes an oscillating motor having a paddle which rotates relative to the powder. When the paddle engages the powder, it stops and the circuit is then opened to the vibrator 40 stopping the flow of powder to the feed hopper. Ultrasonic type of sensors also may be used, or light sensors which also are commercially available. In the event control is not continuous, the tuning fork can be eliminated provided a predetermined amount of powder is charged into the feed hopper at selected intervals.

8

What we claim is:

1. Apparatus for controlling the flow of powder through a system comprising a first feed hopper adapted to receive powder to be transferred through a system and having vibrators mounted thereon for facilitating the flow of powder therethrough, a horizontally disposed feeder tube so positioned below said feed hopper as to receive the powder from said feed hopper, enclosure means associated with said feed hopper and feeder tube for preventing the escape of powder to the environment and for containing the powder in the system, a second feed hopper connected to said feeder tube for receiving powder therefrom, second enclosure means interconnecting the feeder tube with the second feed hopper for containing powder in the system, and means in communication with an outlet opening in the second feed hopper for receiving powder discharged therefrom, characterized in that vibration means (40) are associated with said feeder tube (32) for moving said powder horizontally to the second feed hopper (44), and said first feed hopper (16) includes a spout (26) loosely fitted in said feeder tube (32) in spaced relationship from the bottom thereof thereby providing a space between the walls of the tube to accommodate displacement of the feed hopper spout (26) during its movement imparted by said vibrators, and a boot (34) is disposed so as to interconnect the feed hopper (16) with the feeder tube (32) for containing the powder in the system.

2. Apparatus according to claim 1, characterized in that the walls of said feeder tube (32) are spaced

0013166

a distance from the walls of the second feed hopper (44) for accommodating the displacement of the feeder tube (32) as a result of vibratory motions imparted thereto by the vibration means (40); and a boot (48) is disposed between the feeder tube (32) and said second feed hopper (44) at the point of junction thereof for containing powder in the system.

3. Apparatus according to claim 1 or 2, characterized by a powder level sensor (33) having a probe (35) on an end thereof located adjacent the discharge end of the spout (26) of said feed hopper (16) for sensing the level of powder in the feeder tube (32), and means are provided for electrically connecting the level sensor (33) with the vibration means (40) for controlling operation of the vibration means (40).

4. Apparatus according to claim 1 or 2, characterized in that a level sensor (56) having a probe (58) on an end thereof is located adjacent the discharge end of said second feed hopper (44), and means are provided connecting the level sensor (56) with said vibration means (40) for controlling the amount of powder delivered to and through said second feed hopper (44) in accordance with the level of powder at the discharge end thereof.

FIG. 1

FIG. 2

**European Patent Office**

**EUROPEAN SEARCH REPORT**

001316(

Application number

EP 79 30 3018

| DOCUMENTS CONSIDERED TO BE RELEVANT | | | CLASSIFICATION OF THE APPLICATION (Int. Cl. ) |
|---|---|---|---|
| Category | Citation of document with indication. where appropriate. of relevant passages | Relevant to claim | B 65 G 65/44 G 21 C 21/04 B 65 D 90/48 |
| | US - A - 2 638 248 (ALVORD)  * Column 1, lines 42-55; column 2, lines 1-40; column 4, lines 73-75; column 4, lines 1-4; figures 1,2,4 *  -- | 1,3 | |
| | DE - A - 2 263 876 (NERK)  * Page 3, lines 9-28; figure 1 *  -- | 1,2 | |
| | US - A - 2 921 713 (ZANOTTO)  * Column 3, lines 1-63; column 4, lines 1-7; figures 1,2 *  ---- | 4 | **TECHNICAL FIELDS SEARCHED (Int.Cl.**  B 65 G G 21 C |

CATEGORY OF CITED DOCUMENTS

X: particularly relevant

A: technological background

O: non-written disclosure

P: intermediate document

T: theory or principle underlying the invention

E: conflicting application

D: document cited in the application

L: citation for other reasons

& member of the same patent family. corresponding document

The present search report has been drawn up for all claims

| Place of search | Date of completion of the search | Examiner |
|---|---|---|
| The Hague | 03-03-1980 | OSTIJN |

EPO Form 1503.1  06.78